# EUROPÄISCHE PATENTSCHRIFT

(11) **EP 2 619 613 B1**
(45) Veröffentlichungstag und Bekanntmachung des Hinweises auf die Patenterteilung: **11.10.2017**
(21) Anmeldenummer: 11749734.7
(22) Anmeldetag: 23.08.2011
(51) Int. Cl.: F21V 8/00

(54) **ANORDNUNG ZUM DURCHLEITEN VON LICHT DURCH EINE WANDUNG, INSBESONDERE GEHÄUSEWAND, ELEKTROGERÄT UND VERWENDUNG DER ANORDNUNG**
ARRANGEMENT FOR CONDUCTING LIGHT THROUGH A WALL, IN PARTICULAR A HOUSING WALL, ELECTRONIC DEVICE AND USE OF THE ARRANGEMENT
DISPOSITIF POUR FAIRE PASSER DE LA LUMIÈRE À TRAVERS UNE PAROI, NOTAMMENT UNE PAROI DE BOÎTIER, APPAREIL ÉLECTRIQUE ET LEUR UTILISATION

(30) Priorität: 22.09.2010 DE 102010046042
(43) Veröffentlichungstag der Anmeldung: 31.07.2013
(73) Patentinhaber: Sew-Eurodrive GmbH & Co. KG, 76646 Bruchsal (DE)
(72) Erfinder: DAMINGER, Franz, 67067 Ludwigshafen am Rhein (DE); PÜLS, Thomas, 96215 Lichtenfels (DE)
(86) Internationale Anmeldenummer: PCT/EP2011/004221
(87) Internationale Veröffentlichungsnummer: WO 2012/038015

(56) Entgegenhaltungen:
- EP-A2- 1 914 118
- DE-A1- 10 028 282
- DE-A1- 10 308 019
- DE-A1- 19 705 068
- JP-A- 2006 128 811
- JP-A- 2009 187 971

## Beschreibung

Die Erfindung betrifft eine Anordnung zum Durchleiten von Licht durch eine Wandung, insbesondere Gehäusewand, ein Elektrogerät **und Verwendung der Anordnung**.

Lichtleiter zur Durchleitung von Licht sind allgemein bekannt. Ebenso sind Glasfaserleitungen allgemein bekannt.

Der Erfindung liegt daher die Aufgabe zugrunde, eine Anordnung mit Lichtleiter kostengünstig weiterzubilden, insbesondere wobei die Fertigung einfach und kostengünstig ausführbar sein soll.

Erfindungsgemäß wird die Aufgabe bei der Anordnung zum Durchleiten von Licht durch eine Wandung, insbesondere Gehäusewand, nach den in Anspruch 1 und bei dem Elektrogerät nach den in Anspruch 15 angegebenen Merkmalen gelöst.

Wichtige Merkmale der Erfindung bei der Anordnung zum Durchleiten von Licht durch eine Wandung, insbesondere Gehäusewand, sind, dass sie einen Lichtleiter und ein Aufnahmeteil zur Aufnahme des Lichtleiters aufweist, wobei der Lichtleiter ein Zentralteil aufweist, an welchem zumindest ein oder mehrere Dichtungsabschnitte angespritzt ist beziehungsweise sind, insbesondere also stoffschlüssig verbunden ist beziehungsweise sind.

Von Vorteil ist dabei, dass mittels der aus elastischem Material ausführbaren Dichtungsbereiche nicht nur eine dichte Verbindung mit dem Aufnahmeteil sondern auch eine kraftschlüssige Haltefunktion ermöglicht ist. Außerdem sind Fertigungstoleranzen und/oder thermisch bedingte geometrische Änderungen des Zentralteils und/oder des Aufnahmeteils kompensierbar mittels des elastischen Materials der Dichtungsabschnitte. Des Weiteren ist mittels eines der Dichtungsabschnitte zusätzlich eine formschlüssige Verbindung zwischen Lichtleiter und Aufnahmeteil ermöglicht.

Wichtiger Vorteil ist auch, dass die Dichtungsabschnitte angespritzt sind, also im Kunststoffspritzgussverfahren direkt mit der Seele des Lichtleiters verbunden sind. Dabei wird das Zentralteil in der Spritzgussmaschine im Werkzeug eingelegt und dann mit Kunststoff umspritzt. Auf diese Weise ist ein gutes Anhaften des Materials der Dichtungsabschnitte am Zentralteil erreichbar, also eine stoffschlüssige Verbindung zwischen Zentralteil und Dichtungsabschnitt.

Mittels des Anspritzvorgangs wird der Lichtleiter aus dem Zentralteil und den Dichtungsabschnitten gebildet.

Da im eingepressten, also eingeführten, Zustand keine Spalte zwischen dem Lichtleiter und dem Aufnahmeteil und auch zwischen dem Zentralteil des Lichtleiters und den Dichtungsabschnitten, insbesondere dem von außen sichtbaren Dichtungsabschnitt, vorhanden sind, ist auch Keimbildung oder dergleichen verhinderbar.

Bei einer vorteilhaften Ausgestaltung ist ein Dichtungsabschnitt aus thermoplastischem Material, insbesondere TPE, ausgeführt,
insbesondere wobei alle Dichtungsabschnitte aus thermoplastischem Material, insbesondere TPE, ausgeführt sind. Von Vorteil ist dabei, dass eine besonders einfache Herstellung der elastisch ausgeführten Dichtungsabschnitte vorgesehen ist.

Bei einer vorteilhaften Ausgestaltung ist der Lichtleiter in einer gestuften Ausnehmung, insbesondere Bohrung, des Aufnahmeteils eingeführt, insbesondere eingepresst ist. Von Vorteil ist dabei, dass eine einfache Herstellung ausführbar ist. Außerdem sind thermisch bedingte Längenveränderungen in einfacher Weise mittels entsprechender elastischer Verformung der Dichtungsabschnitte kompensierbar.

Bei einer vorteilhaften Ausgestaltung nehmen die Durchmesser der Ausnehmung, insbesondere Bohrung, in der Wandung in Einführrichtung monoton ab. Von Vorteil ist dabei, dass ein einfaches Einführen in einer einzigen Richtung, insbesondere ohne Drehbewegung, zur Verbindung genügt. Zur Überwindung von Reibungskräften ist für das Einführen dabei eine Presskraft aufzubringen. Hierbei ist während des Einführens ein Maximum zu überschreiten. Denn nach Überschreiten dieses Einpress-Kraftmaximums stülpt sich ein Dichtungsabschnitt um eine Kante herum und bewirkt daher eine geringfügige Abnahme der notwendigen Einpresskraft. Bei weiteren Einführen steigt die Kraft wieder an, weil die Dichtungsabschnitte des Lichtleiters immer stärker verformt werden.

Bei einer vorteilhaften Ausgestaltung ist die Wandung aus Metall, wie beispielsweise Aluminium oder Stahl, aus Keramik oder aus einem Kunststoff gefertigt,

insbesondere wobei die Härte des Materials der Wandung größer ist als die Härte des Materials der Dichtungsabschnitte. Von Vorteil ist dabei, dass das Material des Dichtungsabschnitts sich an Unebenheiten in der Wandung anschmiegt und somit eine besonders gute Dichtfunktion erreichbar ist.

Bei einer vorteilhaften Ausgestaltung leitet das Zentralteil in Einführrichtung Licht durch und/oder ist aus Polykarbonat und/oder aus glasklarem Material gefertigt. Von Vorteil ist dabei, dass das Zentralteil Licht eines im von der Wandung umfassten Innenraum angeordneten Leuchtmittels, insbesondere LED, herausleitbar macht. Dabei sind die Dichtungsabschnitte nur am Umfang des Zentralteils vorgesehen und stören somit die Herausleitung von Licht nicht oder nur geringfügig.

Bei einer vorteilhaften Ausgestaltung weist das Zentralteil einen konvexen oder konkaven Oberflächenabschnitt auf, insbesondere einen linsenförmigen Oberflächenabschnitt. Von Vorteil ist dabei, dass eine Bündelung oder Aufspreizung von Lichtstrahlen ermöglicht ist.

Bei einer vorteilhaften Ausgestaltung sind die Dichtungsabschnitte in einem Kunststoffspritzgussverfahren angespritzt an das Zentralteil, insbesondere stoffschlüssig verbunden. Von Vorteil ist dabei, dass eine feste belastbare Verbindung in einfacher Weise erreichbar ist. Insbesondere ist nun der Lichtleiter ohne separaten Dichtungen ausgeführt und somit ist nur ein einziges Teil logistisch zu berücksichtigen.

Bei einer vorteilhaften Ausgestaltung ist im in die Ausnehmung des Aufnahmeteil eingeführten Zustand der aus Zentralteil und angespritzten Dichtungsabschnitten gebildete Lichtleiter mittels mindestens einem Dichtungsabschnitt kraftschlüssig mit dem Aufnahmeteil verbunden,
insbesondere ist der Lichtleiter eingepresst ins Aufnahmeteil,
insbesondere wobei das Material des Dichtungsabschnittes elastisch verformt ist. Von Vorteil ist dabei, dass mittels der kraftschlüssigen Verbindung auch gleichzeitig eine dichte Verbindung herstellbar ist.

Bei einer vorteilhaften Ausgestaltung ist im in die Ausnehmung des Aufnahmeteil eingeführten Zustand der aus Zentralteil und angespritzten Dichtungsabschnitten gebildete Lichtleiter mittels mindestens einem Dichtungsabschnitt kraftschlüssig und formschlüssig mit dem Aufnahmeteil verbunden,
insbesondere indem ein Hintergriff ausgebildet ist, insbesondere an einer Kante der Wandung des Aufnahmeteils,
insbesondere wobei das Material des Dichtungsabschnittes elastisch verformt ist und zumindest teilweise um die Kante herumgestülpt ist. Von Vorteil ist dabei, dass eine formschlüssige und gleichzeitig kraftschlüssige und darüber hinaus auch dichte Verbindung mittels des Dichtungsabschnitts geschaffen ist.

Bei einer vorteilhaften Ausgestaltung sind drei oder mehr Dichtungsabschnitte vorgesehen, die voneinander beabstandet sind. Von Vorteil ist dabei, dass bei Versagen eines der Dichtungsabschnitte noch zwei weitere zur Verfügung stehen. Sogar bei versagen von zwei Dichtungsabschnitten ist noch ein dritter vorhanden und somit die Dichtfunktion ausgeführt.

Bei einer vorteilhaften Ausgestaltung führen bei Versagen der zwischen Lichtleiter und Aufnahmeteil vorgesehenen Dichtfunktion eines der Dichtungsabschnitte zumindest noch ein oder zwei weitere Dichtungsabschnitte eine zwischen Lichtleiter und Aufnahmeteil vorgesehenen Dichtfunktion aus. Von Vorteil ist dabei, dass die Dichtabschnitte verschiedene Durchmesser aufweisen und somit verschiedenen Kräften ausgesetzt sind. Außerdem ist mittels der axialen Beabstandung jeweils zweier Dichtungsabschnitte die Querkraftaufnahme verbessert; denn das Zentralteil ist sozusagen über die elastischen Dichtungsabschnitte nach Art von Stützlagern im Aufnahmeteil gelagert. Mittels der Ausführung mit sogar drei Dichtungsabschnitten ist eine sehr gute abstützende Wirkung erzielbar und Querkräfte sind verbessert ableitbar.

Bei einer vorteilhaften Ausgestaltung ist im eingeführten Zustand die aus Lichtleiter, umfassend ein Dichtungsabschnitt und Zentralteil, und Aufnahmeteil gebildete Oberfläche geschlossen, also ohne Spalte oder Kerben gebildet. Von Vorteil ist dabei, dass insbesondere in Nassumgebung keine Keime sich einnisten können.

Bei einer vorteilhaften Ausgestaltung ist der Lichtleiter im Aufnahmeteil nur mittels der elastisch verformten Dichtungsabschnitte gehalten, insbesondere also nicht mittels Klebeverbindung und/oder mit Werkzeug zu betätigender Verbindung, wie Schraubverbindung oder dergleichen. Von Vorteil ist dabei, dass eine besonders einfache Verbindung mit Dichtfunktion geschaffen ist.

Wichtige Merkmale bei dem Elektrogerät, insbesondere Umrichter oder Steuergerät, sind, dass es mit einer vorgenannten Anordnung ausgestattet ist, wobei im von der Wandung gehäusebildend umgebenen Raumbereich eine elektronisch ansteuerbare Lichtquelle, insbesondere LED, angeordnet ist,
insbesondere wobei die Lichtquelle auf einer Leiterplatte angeordnet ist, die mit dem Aufnahmeteil lösbar verbunden ist, wobei ein vorgebbarer Abstand mittels Beabstandungsmitteln, insbesondere Abstandshülsen, eingehalten ist zwischen Lichtleiter und Lichtquelle.

Von Vorteil ist dabei, dass ein Elektrogerät mit hoher Schutzart, beispielsweise IP66, IP69k ausführbar ist, wobei eine Leuchtanzeige an der Gehäuseoberfläche, also Wandung, des Geräts vorsehbar ist. Somit ist das Anzeigen von Status der Elektronik deutlich und einfach ausführbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

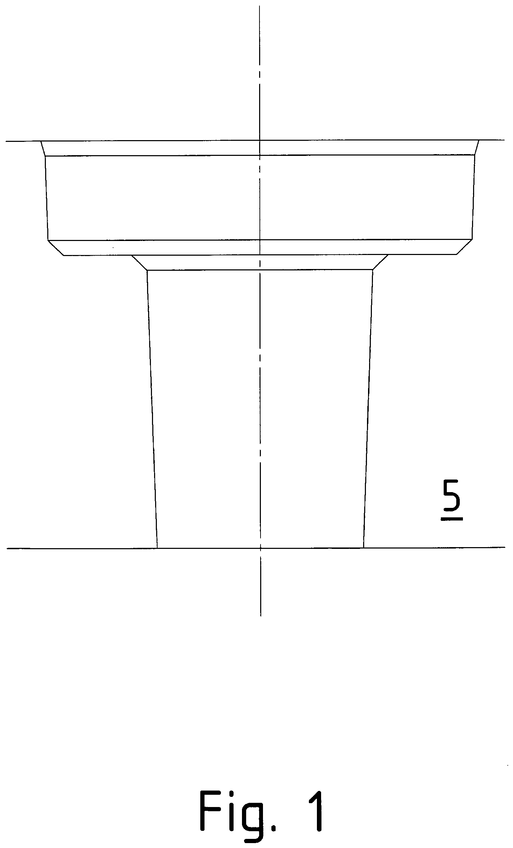

Figur 1 zeigt die gestufte Bohrung in einem Aufnahmeteil zur Aufnahme des Zentralteils 4.

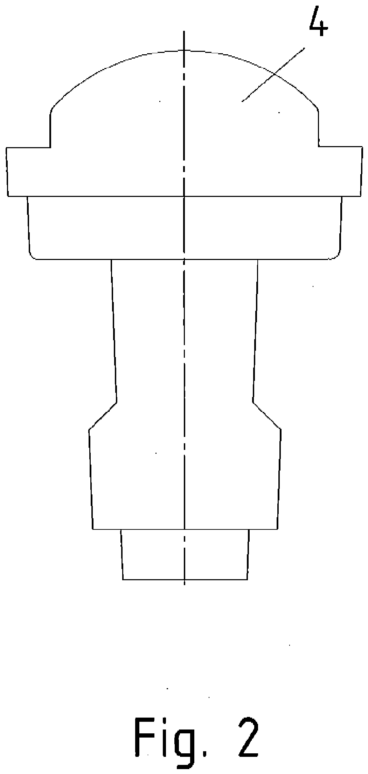

Figur 2 zeigt das Zentralteil 4.

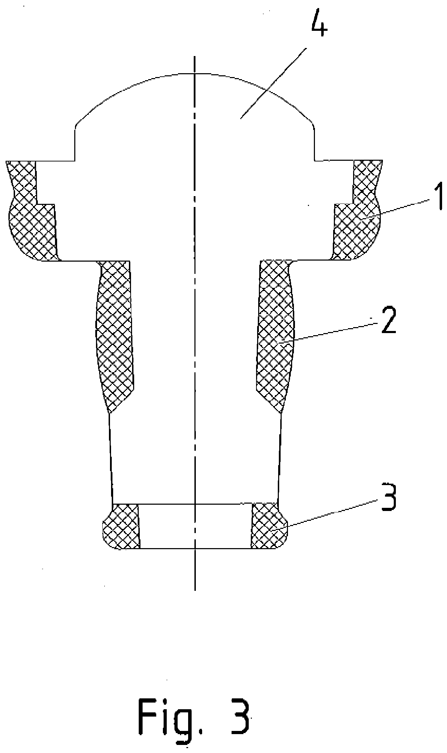

Figur 3 zeigt das Zentralteil mit angespritzten Dichtungsabschnitten, also Dichtungsbereichen.

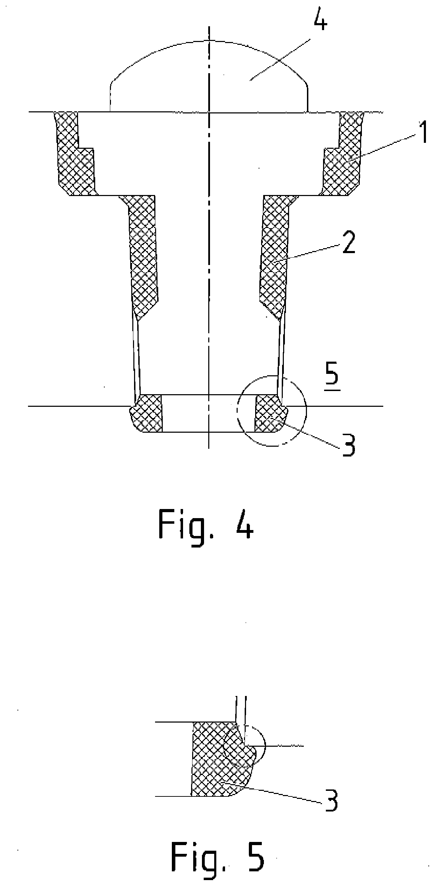

Figur 4 zeigt das in das Aufnahmeteil eingeführte Zentralteil.
Figur 5 zeigt einen vergrößerten Ausschnitt aus Figur 4, wobei ein Hintergriff verdeutlicht ist.

Die erfindungsgemäße Anordnung betrifft einen Lichtleiter, der in eine Bohrung eingeführt ist, welche in einem Aufnahmeteil 5 vorgesehen ist.

Dabei ist die Bohrung als durch die Wand des Aufnahmeteil 5 durchgehende Bohrung ausgeführt. Die Bohrung ist hierbei gestuft ausgeführt, wobei die Innendurchmesser der Bohrung in Einführrichtung des Lichtleiters monoton fallend sind.

Der Lichtleiter, also das Zentralteil 4 mit angespritzt ausgeführten Dichtungsbereichen (1, 2, 3) wird in Normalenrichtung einer Seitenfläche der Wand des Aufnahmeteils 5 eingeführt in die Bohrung.

Das Zentralteil leitet Licht von einer Seite der Wand des Aufnahmeteils zur anderen Seite durch. Hierzu ist das Zentralteil 4 aus transparentem Material, wie beispielsweise Polykarbonat, insbesondere glasklares Polykarbonat, ausgeführt.

Die Dichtungsabschnitte sind aus einem anspritzbaren thermoplastischen Material gefertigt, insbesondere vorzugsweise aus einem thermoplastischen Polymer TPE. Dabei haftet das Material am Zentralteil 4, ist also stoffschlüssig mit diesem verbunden.

Das Aufnahmeteil ist aus einem im Vergleich zum thermoplastischen Material härteren Material gefertigt, wie beispielsweise Metall, insbesondere Aluminium oder Stahl, oder Keramik oder harter Kunststoff.

Ein erster Dichtungsabschnitt 1 ist in einem Bereich des Zentralteils angeordnet, der einen größeren Durchmesser aufweist als der Durchmesser des Bereichs des Zentralteils, an dem der Dichtungsabschnitt 2 angespritzt ist. Die Dichtungsabschnitte 1 und 2 sind in jeweiligen derartigen Bereichen vorgesehen, dass die jeweils überdeckten Radialbereiche voneinander beabstandet sind.

Der Dichtungsabschnitt 2 ist also in einem Bereich des Zentralteils 4 angeordnet, welcher einen kleineren Durchmesser aufweist als derjenige Bereich des Zentralteils 4, in welchem der Dichtungsabschnitt 1 angeordnet ist.

In Einführungsrichtung, also an einem Bereich des Zentralteils 4 mit einem geringeren Durchmesser als der Durchmesser des Zentralteils 4, in welchem der Dichtungsabschnitt 2 angeordnet ist, ist ein weiterer Dichtungsabschnitt 3 vorgesehen. In Einführungsrichtung weist der Dichtungsabschnitt 3 einen Bereich auf, in welchem er einen zunehmenden Durchmesser aufweist. Auf diese Weise ist beim Einführen in das Aufnahmeteil ein Hintergriff an der Innenkante der Bohrung im Aufnahmeteil 5 ermöglicht. Der Dichtungsabschnitt wird hierbei an der Kante sozusagen fast eingeklipst, indem er nach dem Einführen sozusagen über die Kante überquillt.

Durch diesen Hintergriff ist das Zentralteil bei Herausziehen aus dem Aufnahmeteil 5 formschlüssig gehalten, solange die elastische Verformung des Dichtungsabschnittes 3 ausreichend klein bleibt.

Außerdem ist das Zentralteil im Aufnahmeteil mittels der Dichtungsabschnitte (1, 2, 3) kraftschlüssig gehalten, da die Dichtungsabschnitte derart ausgeführt sind, dass sie vor dem Einführen jeweils einen größeren Durchmesser aufweisen als die Innendurchmesser der zugehörigen Bereiche des Aufnahmeteil.

Die Dichtungsbereiche sind aus nicht glasklarem Material und daher konzentrisch um das Zentralteil, also die lichtleitende Seele des Lichtleiters, angeordnet. Dabei ist der kleinste Durchmesser der Dichtungsbereiche nicht verschwindend, so dass Licht im mittigen Bereich des Zentralteils 4 sich im Wesentlichen ungestört ausbreiten kann.

Das Zentralteil ist an seiner Oberseite konvex geformt, wodurch eine optische Linse realisierbar ist. Alternativ ist auch eine konkave Ausformung ausführbar.

Das Zentralteil ist aus Licht-durchleitendem, also Licht-transparentem, Polycarbonat ausführbar, wobei die Dichtzonen aus einem an das Polycarbonat des Zentralteils 4 angespritzten TPE bestehen.

Die Bohrungsabschnitte der Aufnahmebohrung im Aufnahmeteil sind konisch ausgeführt. Somit ist der Lichtleiter zwar einführbar von einer einzigen Seite her, jedoch erzeugen die elastisch verformten Dichtzonen eine Anpresskraft in Normalenrichtung zur konischen Innenwandung. Diese Normalkraft erfährt eine reactio Kraft, welche in Radial- und in axiale Kraftkomponente zerlegbar ist. Die axiale Kraftkomponente zeigt entgegen der axialen Einführrichtung. Mit anderen Worten: Der Lichtleiter, umfassend Zentralteil und Dichtungsabschnitte, wird nach Einführen über lange Zeiträume hinweg aus der Aufnahmebohrung herausgedrängt, da keine Kraftkomponente in Einführrichtung wirkt. Der durch den Dichtungsabschnitt 3 bewirkte Hintergriff hält aber entgegen dieser Kraftrichtung den Lichtleiter in der Aufnahmebohrung. Denn sobald der beim Einführen elastisch etwas zusammengepresste Dichtungsabschnitt 3 beim Einführen des Lichtleiters in die Aufnahmebohrung axial die Kante der Aufnahmebohrung erreicht, dehnt er sich elastisch wieder aus und bildet dadurch den Hintergriff. Somit ist ein Einführen des Lichtleiters von nur einer Seite in die Aufnahmebohrung ermöglicht und der Leichtleiter trotzdem formschlüssig haltbar. Der Lichtleiter ist von einer Seite einführbar und dann sozusagen selbsthemmend gehalten. Dabei ist der Hintergriff auf der der Einführseite abgewandten Seite des Aufnahmeteils angeordnet. Der Hintergriff wirkt dabei direkt zusammen mit der Wandung des Aufnahmeteils, in welchem die Aufnahmebohrung sich befindet.

Der Hintergriff ist wirksam an derjenigen Seite der die Ausnehmung aufweisenden Wandung des Aufnahmeteils, welche auf der von der Einführseite abgewandten Seite des Aufnahmeteils angeordnet ist.

Der Lichtleiter ist ebenfalls mit einem beziehungsweise mehreren zu den konisch verlaufenden Aufnahmebohrungsabschnitten konischen Abschnitt, insbesondere Axialabschnitt, ausgeführt. Nur die Dichtzonen (1, 2, 3) ragen aus diesem Konus ballig hervor.

Die elastisch verformbaren Dichtzonen (1, 2, 3) sind in Einführrichtung, also axialer Richtung, voneinander beabstandet.

In einem weiteren erfindungsgemäßen Ausführungsbeispiel ist das Zentralteil auch an seiner Unterseite konvex oder konkav ausgeformt, um auch hier eine Linsenwirkung erzielbar zu machen.

In einem weiteren erfindungsgemäßen Ausführungsbeispiel ist das zentralteil mitsamt den Dichtungsabschnitten einstückig ausgeführt. Hierzu eignet sich dann insbesondere ein elastisches Licht-transparentes Material, vorzugsweise ein thermoplastisches Elastomer, also TPE.

### Bezugszeichenliste

1 Dichtungsabschnitt
2 Dichtungsabschnitt
3 Dichtungsabschnitt
4 Zentralteil, lichtleitende Seele des Lichtleiters
5 Aufnahmeteil

## Patentansprüche

1. Anordnung zum Durchleiten von Licht durch eine Wandung, insbesondere Gehäusewand, aufweisend einen Lichtleiter und ein Aufnahmeteil zur Aufnahme des Lichtleiters,
insbesondere **zur selbsthemmenden** Aufnahme des Lichtleiters,
insbesondere **wobei der Lichtleiter von einer einzigen Seite des Aufnahmeteils her einführbar** und/oder montierbar ist,
**dadurch gekennzeichnet, dass**
der Lichtleiter ein Zentralteil aufweist, an welchem zumindest in Einführrichtung voneinander beabstandete Dichtungsabschnitte angespritzt sind, also stoffschlüssig verbunden sind,
wobei der Lichtleiter in einer im Aufnahmeteil angeordneten Ausnehmung mit in Einführrichtung abschnittsweise monoton abnehmendem Durchmesser eingepresst ist,
wobei einer (3) der Dichtungsabschnitte einen Bereich mit zunehmenden Durchmesser aufweist, so dass ein Hintergriff an der Innenkante der Ausnehmung ausgebildet ist.

2. Anordnung nach Anspruch 1,
**dadurch gekennzeichnet, dass**
der Lichtleiter, insbesondere umfassend Zentralteil und Dichtungszonen, einstückig als Kunststoffspritzgussteil ausgeführt ist, insbesondere aus Polycarbonat, oder dass
der Lichtleiter nur aus dem Zentralteil und an das Zentralteil angespritzten Dichtungsabschnitten zusammengesetzt ist,
und/oder dass
ein Dichtungsabschnitt aus thermoplastischem Material, insbesondere aus einem thermoplastischem Elastomer, insbesondere TPE, ausgeführt ist,
insbesondere wobei alle Dichtungsabschnitte aus thermoplastischem Material, insbesondere TPE, ausgeführt sind.

3. Anordnung nach mindestens einem der vorangegangenen Ansprüche,
**dadurch gekennzeichnet, dass** die Ausnehmung gestuft ist.

4. Anordnung nach mindestens einem der vorangegangenen Ansprüche, **dadurch gekennzeichnet, dass**
die Ausnehmung, insbesondere Bohrung, konisch ausgeführt ist.

5. Anordnung nach mindestens einem der vorangegangenen Ansprüche,
**dadurch gekennzeichnet, dass**
die Wandung aus Metall, wie beispielsweise Aluminium oder Stahl, aus Keramik oder aus einem Kunststoff gefertigt ist,
insbesondere wobei die Härte des Materials der Wandung größer ist als die Härte des Materials der Dichtungsabschnitte.

6. Anordnung nach mindestens einem der vorangegangenen Ansprüche,
**dadurch gekennzeichnet, dass**
das Zentralteil in Einführrichtung Licht durchleitet und/oder aus Polykarbonat und/oder aus glasklarem Material gefertigt ist.

7. Anordnung nach mindestens einem der vorangegangenen Ansprüche,
**dadurch gekennzeichnet, dass**
das Zentralteil einen konvexen oder konkaven Oberflächenabschnitt aufweist, insbesondere einen linsenförmigen Oberflächenabschnitt.

8. Anordnung nach mindestens einem der vorangegangenen Ansprüche,
**dadurch gekennzeichnet, dass**
die Dichtungsabschnitte in einem Kunststoffspritzgussverfahren angespritzt sind an das Zentralteil, insbesondere stoffschlüssig verbunden sind.

9. Anordnung nach mindestens einem der vorangegangenen Ansprüche,
**dadurch gekennzeichnet, dass**
im in die Ausnehmung des Aufnahmeteil eingeführten Zustand der aus Zentralteil und angespritzten Dichtungsabschnitten gebildete Lichtleiter mittels mindestens einem Dichtungsabschnitt kraftschlüssig mit dem Aufnahmeteil verbunden ist,
insbesondere eingepresst ist ins Aufnahmeteil,
insbesondere wobei das Material des Dichtungsabschnittes elastisch verformt ist.

10. Anordnung nach mindestens einem der vorangegangenen Ansprüche,
**dadurch gekennzeichnet, dass**
ein am Zentralteil vorgesehener Dichtungsabschnitt als - insbesondere am Aufnahmeteil wirksamer - Hintergriff wirksam ist, insbesondere der an einer von der Einführseite abgewandten Seite des Aufnahmeteils wirksam ist, insbesondere als zumindest einseitig wirkende und/oder formschlüssig wirkende Axialsicherung für den Lichtleiter in der Ausnehmung des Aufnahmeteils,
und/oder dass
im in die Ausnehmung des Aufnahmeteil eingeführten Zustand der aus Zentralteil und angespritzten Dichtungsabschnitten gebildete Lichtleiter mittels mindestens einem Dichtungsabschnitt kraftschlüssig und formschlüssig mit dem Aufnahmeteil verbunden ist,
insbesondere indem ein Hintergriff ausgebildet ist, insbesondere an einer Kante der Wandung des Aufnahmeteils,
insbesondere wobei das Material des Dichtungsabschnittes elastisch verformt ist und zumindest teilweise um die Kante herumgestülpt ist.

11. Anordnung nach mindestens einem der vorangegangenen Ansprüche,
**dadurch gekennzeichnet, dass**
drei oder mehr Dichtungsabschnitte vorgesehen sind, die voneinander beabstandet sind.

12. Anordnung nach mindestens einem der vorangegangenen Ansprüche,
**dadurch gekennzeichnet, dass**
bei Versagen der zwischen Lichtleiter und Aufnahmeteil vorgesehenen Dichtfunktion eines der Dichtungsabschnitte zumindest noch ein oder zwei weitere Dichtungsabschnitte eine zwischen Lichtleiter und Aufnahmeteil vorgesehenen Dichtfunktion ausführen,
und/oder dass
im eingeführten Zustand die aus Lichtleiter, umfassend ein Dichtungsabschnitt und Zentralteil, und Aufnahmeteil gebildete Oberfläche geschlossen, also ohne Spalte oder Kerben gebildet ist.

13. Anordnung nach mindestens einem der vorangegangenen Ansprüche,
**dadurch gekennzeichnet, dass**
der Lichtleiter im Aufnahmeteil nur mittels der elastisch verformten Dichtungsabschnitte gehalten ist, insbesondere also nicht mittels Klebeverbindung und/oder mit Werkzeug zu betätigender Verbindung, wie Schraubverbindung oder dergleichen.

14. Elektrogerät, insbesondere Umrichter oder Steuergerät, mit einer Anordnung nach mindestens einem der vorangegangenen Ansprüche,
insbesondere wobei im von der Wandung gehäusebildend umgebenen Raumbereich eine elektronisch ansteuerbare Lichtquelle, insbesondere LED, angeordnet ist,
insbesondere wobei die Lichtquelle auf einer Leiterplatte angeordnet ist, die mit dem Aufnahmeteil lösbar verbunden ist, wobei ein vorgebbarer Abstand mittels Beabstandungsmitteln, insbesondere Abstandshülsen, eingehalten ist zwischen Lichtleiter und Lichtquelle.

15. Verwendung einer Anordnung nach einem der Ansprüche 1 bis 13,
bei einem Elektrogerät, insbesondere bei einem Elektrogerät nach Anspruch 14.

## Claims

1. Arrangement for transmitting light through a wall, in particular housing wall, having a light guide and a receiving part for receiving the light guide,
in particular for the self-locking reception of the light guide,
in particular wherein the light guide is insertable and/or mountable from a single side of the receiving part,
**characterised in that**
the light guide has a central part on which sealing portions spaced from one another at least in the insertion direction are integrally moulded, in particular therefore are connected in a material-locking manner,
wherein the light guide is pressed into a cutout arranged in the receiving part and having a diameter decreasing monotonically in the insertion direction in portions,
wherein one (3) of the sealing portions has a region with increasing diameter, so that a rear grip on the inner edge of the cutout is formed.

2. Arrangement according claim 1,
**characterised in that**
the light guide, in particular comprising central part and sealing zones, is configured in one piece as a plastic injection moulded part, in particular made of polycarbonate, or **in that**
the light guide is composed only of the central part and sealing portions integrally moulded onto the central part, and/or **in that**
a sealing portion is made of thermoplastic material, in particular of a thermoplastic elastomer, in particular TPE, in particular wherein all the sealing portions are made of thermoplastic material, in particular TPE.

3. Arrangement according to at least one of the preceding claims,
**characterised in that**
the cutout is stepped.

4. Arrangement according to at least one of the preceding claims,
**characterised in that**
the cutout, in particular bore, is configured conically.

5. Arrangement according to at least one of the preceding claims,
**characterised in that**
the wall is made of metal, such as for example aluminium or steel, of ceramic or of a plastic,
in particular wherein the hardness of the material of the wall is greater than the hardness of the material of the sealing portions.

6. Arrangement according to at least one of the preceding claims,
**characterised in that**
the central part transmits light in the insertion direction and/or is made of polycarbonate and/or of clear material.

7. Arrangement according to at least one of the preceding claims,
**characterised in that**
the central part has a convex or concave surface portion, in particular a lens-shaped surface portion.

8. Arrangement according to at least one of the preceding claims,
**characterised in that**
the sealing portions are integrally moulded onto the central part in a plastic injection moulding process, in particular are connected in a material-locking manner.

9. Arrangement according to at least one of the preceding claims,
**characterised in that**
in the state inserted into the cutout of the receiving part, the light guide formed from the central part and the integrally moulded sealing portions is connected by means of at least one sealing portion in a force-locking manner to the receiving part,
in particular is pressed into the receiving part,
in particular wherein the material of the sealing portion is elastically deformed.

10. Arrangement according to at least one of the preceding claims,
**characterised in that**
a sealing portion provided on the central part is effective as a rear grip - effective in particular on the receiving part -, in particular which is effective on a side of the receiving part facing away from the insertion side, in particular as an axial securing means for the light guide in the cutout of the receiving part, which securing means acts on at least one side and/or or acts in a form-locking manner,
and/or **in that**
in the state inserted into the cutout of the receiving part, the light guide formed from the central part and the integrally moulded sealing portions is connected by means of at least one sealing portion in a force-locking manner and in a form-locking manner to the receiving part,
in particular by a rear grip being formed, in particular on an edge of the wall of the receiving part,
in particular wherein the material of the sealing portion is elastically deformed and is at least partly turned around the edge.

11. Arrangement according to at least one of the preceding claims,
**characterised in that**
three or more sealing portions are provided, which are spaced from one another.

12. Arrangement according to at least one of the preceding claims,
**characterised in that**
in the event of failure of the sealing function, provided between the light guide and the receiving part, of one of the sealing portions, at least one or two further sealing portions still carry out a sealing function provided between the light guide and the receiving part,
and/or **in that**
in the inserted state the surface formed from the light guide, comprising a sealing portion and central part, and receiving part, is closed, i.e. formed without gaps or notches.

13. Arrangement according to at least one of the preceding claims,
**characterised in that**
the light guide is held in the receiving part only by means of the elastically deformed sealing portions, in particular therefore not by means of adhesive connection and/or connection to be actuated by a tool, such as a screwed connection or the like.

14. Electric device, in particular converter or control device, having an arrangement according to at least one of the preceding claims,
in particular wherein an electronically controllable light source, in particular LED, is arranged in the spatial region surrounded by the wall forming a housing,
in particular wherein the light source is arranged on a printed circuit board which is detachably connected to the receiving part, wherein a predeterminable distance is maintained between the light guide and the light source by means of spacing means, in particular spacing sleeves.

15. Use of an arrangement according to one of claims 1 to 13, in an electric device, in particular in an electric device according to claim 14.

## Revendications

1. Dispositif pour faire passer de la lumière à travers une paroi, en particulier une paroi de boîtier,
présentant un guide de lumière et une partie réceptrice destinée à recevoir le guide de lumière, en particulier à recevoir le guide de lumière de manière autobloquante,
sachant en particulier que le guide de lumière peut être introduit et/ou monté depuis un seul côté de la partie réceptrice,
**caractérisé en ce que** le guide de lumière présente une partie centrale sur laquelle sont moulés par injection, donc sont assemblés par liaison de matière, des segments d'étanchéité distants les uns des autres au moins dans la direction d'introduction, sachant que le guide de lumière est emmanché dans un évidement disposé dans la partie réceptrice et dont le diamètre diminue sectoriellement de manière monotone dans la direction d'introduction,
sachant qu'un (3) des segments d'étanchéité présente une région de diamètre croissant, formant ainsi une prise arrière sur le bord intérieur de l'évidement.

2. Dispositif selon la revendication 1, **caractérisé en ce que** le guide de lumière, comprenant en particulier une partie centrale et des zones d'étanchéité, est réalisé d'un seul tenant sous forme de pièce moulée par injection de matière plastique, en particulier en polycarbonate,
ou **en ce que** le guide de lumière est composé uniquement de la partie centrale et de segments d'étanchéité moulés par injection sur la partie centrale,
et/ou **en ce qu'**un segment d'étanchéité est réalisé en matériau thermoplastique, en particulier en un élastomère thermoplastique, en particulier en TPE,
sachant en particulier que tous les segments d'étanchéité sont réalisés en matériau thermoplastique, en particulier en TPE.

3. Dispositif selon au moins une des revendications précédentes, **caractérisé en ce que** l'évidement est étagé.

4. Dispositif selon au moins une des revendications précédentes, **caractérisé en ce que** l'évidement, en particulier un perçage, est réalisé conique.

5. Dispositif selon au moins une des revendications précédentes, **caractérisé en ce que** la paroi est fabriquée en métal, comme par exemple de l'aluminium ou de l'acier, en céramique ou en une matière plastique,
sachant en particulier que la dureté du matériau de la paroi est supérieure à la dureté du matériau des segments d'étanchéité.

6. Dispositif selon au moins une des revendications précédentes, **caractérisé en ce que** la partie centrale fait passer la lumière dans la direction d'introduction et/ou est fabriquée en polycarbonate et/ou en matériau translucide.

7. Dispositif selon au moins une des revendications précédentes, **caractérisé en ce que** la partie centrale présente une portion de surface convexe ou concave, en particulier une portion de surface lenticulaire.

8. Dispositif selon au moins une des revendications précédentes, **caractérisé en ce que** les segments d'étanchéité sont moulés par injection sur la partie centrale, en particulier lui sont assemblés par liaison de matière, en un procédé de moulage par injection de matière plastique.

9. Dispositif selon au moins une des revendications précédentes, **caractérisé en ce que**, dans l'état introduit dans l'évidement de la partie réceptrice, le guide de lumière formé de la partie centrale et des segments d'étanchéité moulés par injection sur celle-ci est assemblé à force à la partie réceptrice par l'intermédiaire d'au moins un segment d'étanchéité,
en particulier est emmanché dans la partie réceptrice,
sachant en particulier que le matériau du segment d'étanchéité est élastiquement déformé.

10. Dispositif selon au moins une des revendications précédentes, **caractérisé en ce qu'**un segment d'étanchéité prévu sur la partie centrale agit comme prise arrière - en particulier agissant sur la partie réceptrice -, en particulier agit sur un côté de la partie réceptrice qui est éloigné du côté d'introduction, en particulier en tant que blocage axial, agissant au moins d'un côté et/ou agissant par complémentarité de forme, pour le guide de lumière dans l'évidement de la partie réceptrice,
et/ou **en ce que**, dans l'état introduit dans l'évidement de la partie réceptrice, le guide de lumière formé de la partie centrale et des segments d'étanchéité moulés par injection sur celle-ci est assemblé à force et par complémentarité de forme à la partie réceptrice par l'intermédiaire d'au moins un segment d'étanchéité,
en particulier par le fait qu'une prise arrière est formée, en particulier sur un bord de la paroi de la partie réceptrice,
sachant en particulier que le matériau du segment d'étanchéité est élastiquement déformé et est retourné au moins partiellement tout autour du bord.

11. Dispositif selon au moins une des revendications précédentes, **caractérisé en ce qu'**il est prévu trois segments d'étanchéité ou davantage, qui sont distants les uns des autres.

12. Dispositif selon au moins une des revendications précédentes, **caractérisé en ce qu'**en cas de défaillance de la fonction d'étanchéité, prévue entre le guide de lumière et la partie réceptrice, d'un des segments d'étanchéité, au moins encore un ou deux autres segments d'étanchéité réalisent une fonction d'étanchéité prévue entre le guide de lumière et la partie réceptrice,
et/ou **en ce que**, dans l'état introduit, la surface formée du guide de lumière, comprenant un segment d'étanchéité et la partie centrale, et de la partie réceptrice est réalisée fermée, donc sans fentes ni entailles.

13. Dispositif selon au moins une des revendications précédentes, **caractérisé en ce que** le guide de lumière est maintenu dans la partie réceptrice uniquement au moyen des segments d'étanchéité élastiquement déformés, en particulier donc non pas au moyen d'un assemblage par collage et/ou d'un assemblage à réaliser avec un outil, comme un assemblage par vis ou analogue.

14. Appareil électrique, en particulier convertisseur ou appareil de commande, avec un dispositif selon au moins une des revendications précédentes, sachant en particulier qu'une source de lumière pouvant être électroniquement commandée, en particulier une DEL, est disposée dans la région spatiale entourée par la paroi en formant un boîtier,
sachant en particulier que la source de lumière est disposée sur une carte à circuits imprimés qui est assemblée de manière amovible à la partie réceptrice, sachant qu'une distance pouvant être prédéfinie est respectée entre le guide de lumière et la source de lumière à l'aide de moyens d'espacement, en particulier de douilles d'écartement.

15. Utilisation d'un dispositif selon l'une des revendications 1 à 13 pour un appareil électrique, en particulier pour un appareil électrique selon la revendication 14.
